## Europäisches Patentamt

## European Patent Office

## Office européen des brevets

(19)

(11) Veröffentlichungsnummer: **0 048 767**
**B1**

---

(12) **EUROPÄISCHE PATENTSCHRIFT**

(45) Veröffentlichungstag der Patentschrift:
20.03.85

(51) Int. Cl.⁴: **G 06 F 9/46**

(21) Anmeldenummer: **80105870.2**

(22) Anmeldetag: **27.09.80**

(54) Prioritätsstufengesteuerte Unterbrechungseinrichtung.

(43) Veröffentlichungstag der Anmeldung:
07.04.82 Patentblatt 82/14

(45) Bekanntmachung des Hinweises auf die Patenterteilung:
20.03.85 Patentblatt 85/12

(84) Benannte Vertragsstaaten:
CH DE FR GB IT LI SE

(56) Entgegenhaltungen:
DE - A - 2 659 662

A.F.I.P.S. CONFERENCE PROCEEDINGS, Band 37,
"Proceedings of the fall joint computer conference,
November 1970, Seiten 621-627 Montvale, New Jersey
J.D. ERWIN et al.: "Interrupt processing with quequed
content addressable momories"

(73) Patentinhaber: **IBM DEUTSCHLAND GMBH,
Pascalstrasse 100, D-7000 Stuttgart 80 (DE)**

(84) Benannte Vertragsstaaten: **DE**

(73) Patentinhaber: **International Business Machines
Corporation, Old Orchard Road, Armonk, N.Y. 10504 (US)**

(84) Benannte Vertragsstaaten: **CH FR GB IT LI SE**

(72) Erfinder: **Heinrich, Hans Joachim, Laubersberg 12,
D-7312 Kirchheim/Teck (DE)**
Erfinder: **Schütt, Dieter, Dr., Fallmerayerstrasse 17,
D-8000 München 40 (DE)**

(74) Vertreter: **Jost, Ottokarl, Dipl.-Ing., Schönaicher
Strasse 220, D-7030 Böblingen (DE)**

## Beschreibung

Die Erfindung betrifft eine prioritätsstufengesteuerte Unterbrechungseinrichtung nach dem Oberbegriff des Anspruchs 1.

Die schnelle Behandlung von Unterbrechungs- anforderungen der verschiedensten Unterbre- chungsquellen, spielt auf dem Gebiet der elektro- nischen Datenverarbeitungsanlagen, insbesonde- re für die Steuerung von Prozessen und Verfahrensabläufen eine wesentliche Rolle. Die Bedeutung der schnellen Behandlung von Unterbrechungsanforderungen bei derartigen Systemen beruht darauf, dass im allgemeinen für die Prozess- und Verfahrenssteuerung eine Vielzahl von Unterbrechungsquellen, beispielsweise Messwerte von Sensoren für Temperatur, Druck, Feuchtigkeit, Durchflussmengen und dgl., Unterbrechungen bzw. Änderungen des Prozess- oder Verfahrensablaufs erforderlich machen.

Auch bei der Steuerung von Prozessorfeldern hinsichtlich ihrer Modulkommunikation und -steuerung ist eine schnelle und flexible Behand- lung von Unterbrechungsanforderungen wün- schenswert. Die Verwaltung von strukturierten Programmen bei Multiprogrammierung ist, soll sie effektiv sein, ebenfalls auf schnelle und flexi- ble prioritätsstufengesteuerte Unterbrechungs- einrichtungen angewiesen.

Die bisher für die Bedienung von Unterbrechungsanforderungen vorgesehenen Lösungen beruhen auf sehr kostspieligen Einrichtungen mit komplizierten Schaltkreisstrukturen, die zwar die erforderliche Reaktionsgeschwindigkeit aufbringen, aber wegen ihrer komplizierten Struktur sehr aufwendig und fehleranfällig sind.

So ist beispielsweise in der DT-AS 1 234 059 eine Steuereinrichtung in einem Multi-Rechnersystem beschrieben, welche die Zuteilung von Prioritätsrängen an die einzelnen Rechner des Systems, die sich Programme oder Programmteile unterschiedlicher Prioritätsränge gegenseitig zuweisen oder wieder abnehmen, vornimmt. Jedem Rechner wird dabei dynamisch immer nur derjenige Prioritätsrang des gerade von ihm bearbeiteten Programmteils für die Dauer der Verweilzeit dieses Programmteiles in ihm übergeben. Es handelt sich also um eine schaltkreisgesteuerte Zuteilung von Programmrängen, wobei eine Schieberegisterstruktur verwendet wird, bei der den Gruppen von Schieberegister-Stufen Prioritätsränge fest zugeordnet sind. Eine Zuteilung des Prioritätsranges erfolgt durch Verschieben der Adresse des Rechners oder der Rechnernummer in dem Schieberegister in Richtung auf höhere oder niedrigere Prioritätsränge, je nach der Priorität des gerade in einem Rechner laufenden Programmteils.

Es handelt sich hier also noch nicht um eine Lösung zur prioritätskonformen Bedienung von Unterbrechungsanforderungen unterschiedlicher Priorität, sondern um eine Zuteilung von Prioritätsrängen an verschiedene Rechner eines Multiprozessorsystems.

Insbesondere für Datenverarbeitungsanlagen der mittleren bis unteren Leistungsklasse, die eine äusserst schnelle Reaktion auf Unterbrechungsanforderungen erfordern, ist mit der DT-OS 2 659 662 eine prioritätsstufengesteuerte Unterbrechungseinrichtung bekannt geworden, die über ein Schieberegister verfügt, dessen Stufen permanent den Unterbrechungsstufen (Prioritätsstufen) fest zugeordnet sind. Mit jeder Stufe sind ferner Vergleicher verbunden, welche die Unter- brechungsstufen, denen die Unterbrechungsan- forderungen angehören, mit der Unterbrechungs- stufe der jeweils zugeordneten Stufe vergleicht. Ausserdem ist ein Stapelspeicher vorhanden, der die Prioritätsunterstufen, die in einer Unterbre- chungsanforderung mitenthalten sind, zwischen- speichert. Zur Steuerung dieses Pufferspeichers sind Prüfschaltungen vorgesehen, welche den Zustand des Stapels (voll, nicht voll, leer oder dgl.) überprüft. Ein Basisadressenregister und ein In- struktionsadressenregister, in dem die Basis- adresse mit der jeweiligen Unterbrechungsunter- stufe kombiniert wird, um eine Instruktionsadresse zu bilden, ist ebenfalls jeder Stufe zugeordnet. Die reale Adresse, die sich somit in einem Instruktionsadressenregister befindet, zeigt auf die erste Instruktion einer Unterbrechungsroutine, die für die Ausführung oder Bedienung einer Unterbre- chungsanforderung der entsprechenden Unter- brechungsquelle erforderlich ist.

Durch die serielle Übertragung der Unterbrechungsanforderungen in das Schieberegister und durch die starre Zuteilung der Unterbrechungsstufen an die Stufen des Schieberegisters und damit an deren nachgeschaltete Steuergruppen ergibt sich ein Betriebsablauf, der für eine Reihe von Anwendungsfällen nicht schnell und auch nicht flexibel genug ist.

Eine schnellere und auch flexiblere prioritätsstufengesteuerte Unterbrechungseinrichtung ist in dem Aufsatz «Interrupt Processing With Queued Content-Addressable Memories», von J.D. Erwin und E.D. Jensen beschrieben, der in den A.F.I.P.S. Conference Proceedings, Band 37, Proceedings of the Fall Joint Computer Conference, November 1970, Montval, New Jersey, S. 621 bis 627 veröffentlicht ist.

Das zentrale Element der dort beschriebenen Einrichtung ist ein wortweiser zweidimensionaler Assoziativspeicher, der von einer Prioritätslogik und einem Notizbuchspeicher zugreifbar ist. In diesem Assoziativspeicher, der als Kombination eines Assoziativspeichers und eines Stapelspeichers angesehen werden kann, werden Wörter gespeichert, die aus einer Prioritätsstufe, einer Leitungsnummer und einer Unterbrechungsquellenidentifikation bestehen. Die Prioritätsstufe wird vom Notizbuchspeicher, die Leitungsnummer und die Unterbrechungsquellenidentifizierung von der Prioritätslogik geliefert.

Da der Assoziativspeicher als Stapelspeicher ausgebildet ist, der nach dem FIFO-Algorithmus betrieben wird, werden die unter einer bestimmten Prioritätsstufe abgelegten Wörter in einer Prioritätsstufe nacheinander abgearbeitet.

Da die Bildung der Adresse einer Unterbrechungsroutine aber von dem angeschlossenen zentralen Prozessor erzeugt und dann gesteuert wird, wobei dieser die Werte der Unterbrechungsstufe, der Unterbrechungsquellenidentifizierung und eines Zeigers benötigt, der wiederum vom Notizbuchspeicher nach Ansteuerung durch den Assoziativspeicher geliefert wird, kann von diesem Mechanismus zu einer Zeit nur eine Adresse einer Untrebrechungsroutine erzeugt werden.

Die eingangs erwähnten Multifunktionen, wie beispielsweise Multiprogrammierung oder Multiverarbeitung können durch eine solche Unterbrechungseinrichtung nicht unterstützt werden.

Die Erfindung hat sich daher die Aufgabe gestellt, eine gegenüber den genannten Lösungen hinsichtlich Geschwindigkeit und Flexibilität der Behandlung von Unterbrechungsanforderungen verbesserte Lösung anzugeben, die insbesondere geeignet ist, Multiprogrammierungs- oder -verarbeitungsfunktionen zu unterstützen.

Gelöst wird diese Aufgabe der Erfindung durch die im Hauptanspruch angegebenen Merkmale. Vorteilhafte Ausgestaltungen und Weiterbildungen des Gegenstandes der Erfindung sind den Unteransprüchen zu entnehmen.

Die prioritätsstufengesteuerte Unterbrechungseinrichtung gemäss der Erfindung bietet eine Reihe von Vorteilen, so ist sie schneller, flexibler und sicherer als die genannten bekannten Einrichtungen. Schneller ist sie deshalb, weil das Auffangen der Unterbrechungsanforderungen in einem Assoziativspeicher eine schnelle Weitergabe der ausgewählten Unterbrechungsunterstufen durch byteparalleles Auslesen ermöglicht. Auch die weitgehend parallele Verarbeitung der Unterbrechungsanforderungen verschiedener Unterbrechungsstufen (Priorität) in einem linearen Feld unabhängiger Verarbeitungselemente führt zu kurzen Antwortzeiten.

Ihre Flexibilität wird durch eine dynamische Zuordnung von Verarbeitungselementen und Reserve-Verarbeitungselementen zu den verschiedenen Unterbrechungsstufen erzielt. Auch die über Maskenworte möglichen Prioritätsänderungen verleihen der Einrichtung eine erhöhte Flexibilität.

Durch die im wesentlichen durch Schaltkreise gesteuerte Bedienung von Unterbrechungsanforderungen ergibt sich neben einer hohen Geschwindigkeit auch eine höhere Betriebssicherheit, da kein Umschalten von Programmebenen erfolgt, ein Durchlaufen von Tafeln nicht erforderlich ist und so Schalthäufigkeiten vermieden werden.

Von grossem Vorteil ist auch die direkte Erzeugung von Speichersprungadressen für die Unterbrechungsroutinen und die bessere Hauptspeicherausnutzung durch programmierbare Basisadressenregister.

Ausserdem kann, je nach Komplexität der Verknüpfungslogik in einem Verarbeitungselement, ein solches Verarbeitungselement auf einer Steckkarte bzw. durch ein lineares Feld von Mikroprozessoren realisiert werden.

Auch eine simultane Ausführung von Unterbrechungsroutinen gleicher Unterbrechungsstufe auf mehreren Prozessoren ist möglich, wenn mehrere Instruktionsadressenregister je Unterbrechungsstufe vorgesehen werden.

Im folgenden wird ein Ausführungsbeispiel der Erfindung anhand der Fign. näher erläutert.

Es zeigen:

Fign. 1 und 2, 2A Blockdiagramme der prioritätsstufengesteuerten Unterbrechungseinrichtung,

Fign. 3A bis 3D Darstellungen des Datenformats einer Unterbrechungsanforderung,

Fig. 4 ein Betriebsablaufdiagramm,

Fig. 5 das Blockdiagramm einer Maskierungsschaltung und eine Transformationstabelle,

Fig. 6 ein Impulsdiagramm zur Veranschaulichung der zeitlichen Relation zweier Taktreihen T und t,

Fig. 7 ein Blockdiagramm zweier Torsteuerimpulsgeneratoren und

Fig. 8 Betriebsablaufdiagramme zur Darstellung paralleler Vorverarbeitungsvorgänge in mehreren Verarbeitungselementen.

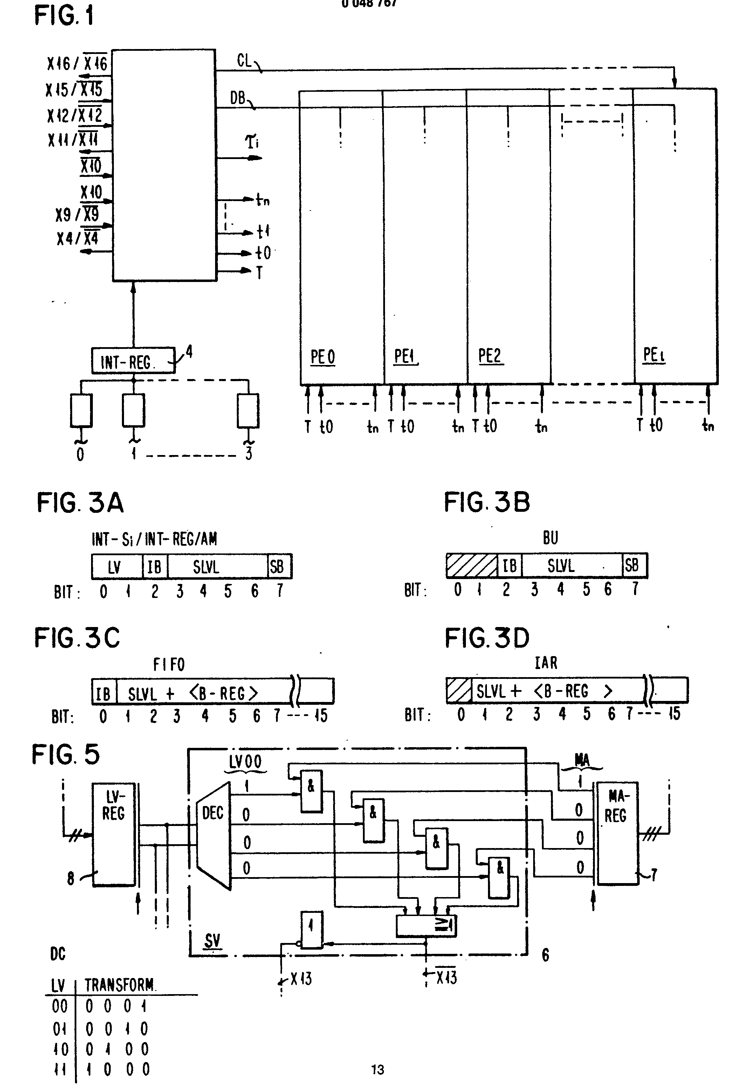

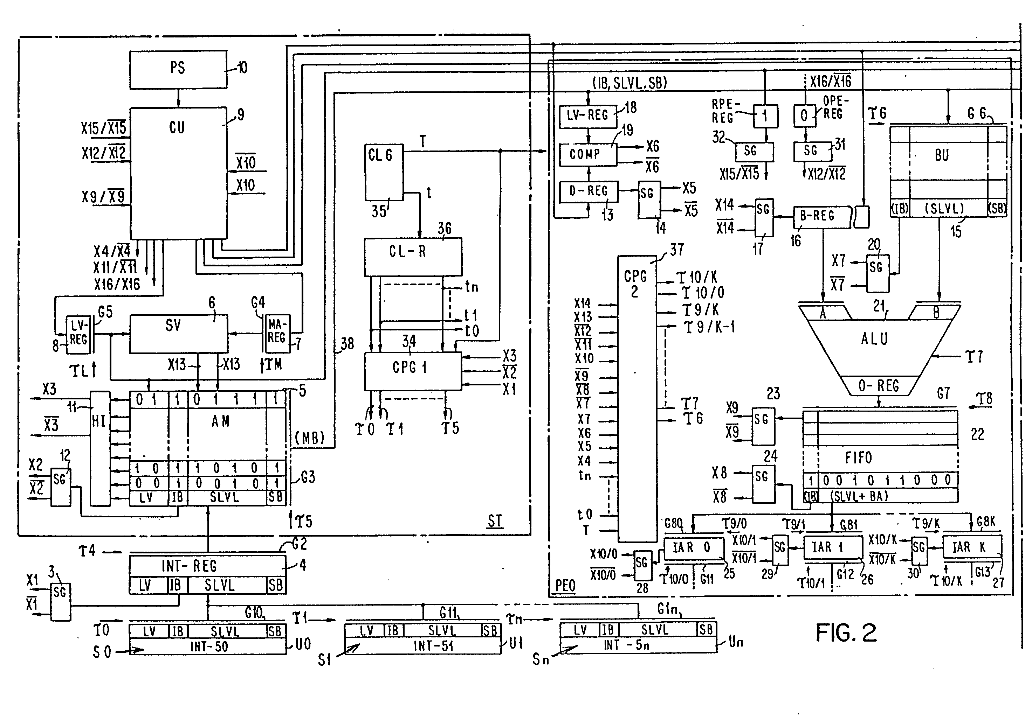

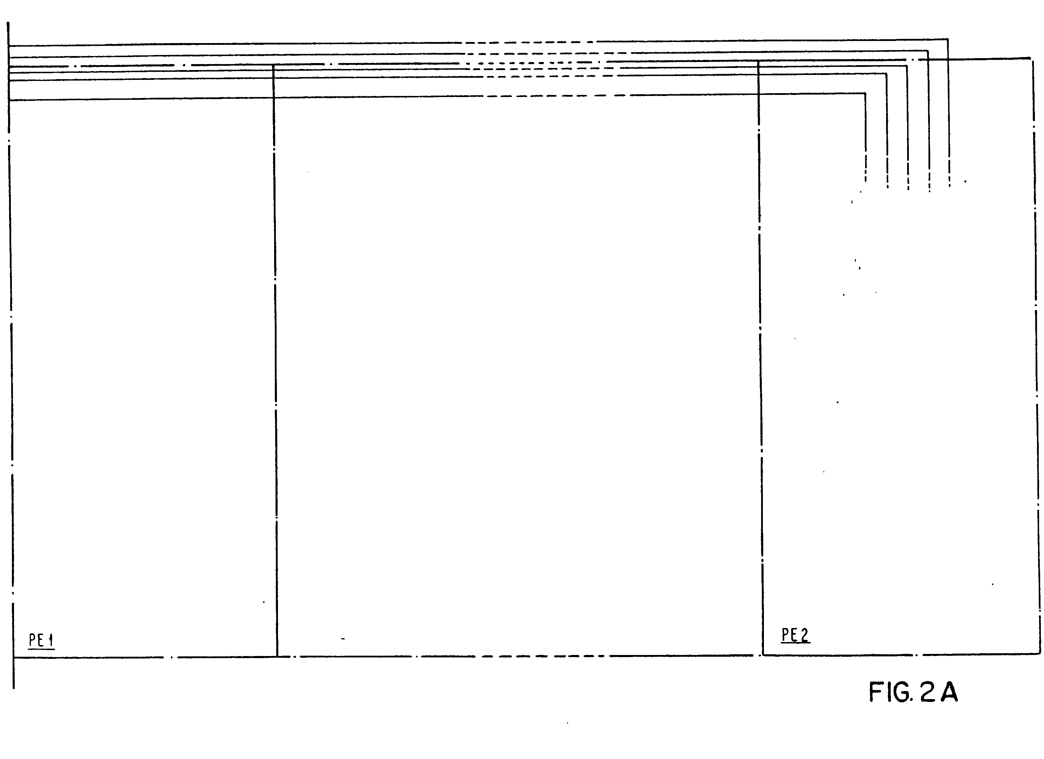

Das Blockschaltbild einer Steuereinheit zur schnellen und flexiblen Behandlung von Unterbrechungsanforderungen verschiedener Unterbrechungsquellen zeigt Fig. 1. Jede Unterbrechungsquelle verfügt dabei über mindestens ein Register 0, 1, 2 oder 3, in das die Unterbrechungsquelle ihre formatierte Unterbrechungsanforderung an die Steuerung ST abgibt. Das Format einer Unterbrechungsanforderung besteht, wie der Darstellung in Fig. 3A zu ersehen ist, aus einer Unterbrechungsstufe LV, einer Unterbrechungsunterstufe SLVL, einem Unterbrechungsbit IB und einem Sonderbit SB. Die Unterbrechungsstufe LV entspricht hierbei dem Prioritätsrang oder kurz der Priorität, die der betreffenden Unterbrechungsquelle im System zugeordnet ist.

Unterbrechungsanforderungen, deren Unterbrechungsbit auf 1 gesetzt ist, erwarten von der Unterbrechungssteuerung eine sofortige Bedienung. Diese erfolgt dadurch, dass die jeweiligen Unterbrechungsanforderungen über ein Unterbrechungsregister 4 in die Steuerung ST eingegeben werden.

Diese Steuerung verteilt die eingegangenen Unterbrechungsanforderungen hinsichtlich ihrer Priorität auf bestimmte Verarbeitungselemente PE0 bis PE1, in denen die Unterbrechungsanforderungen in soweit vorverarbeitet werden, als sie in Instruktionsadressen umgesetzt werden, die im allgemeinen die Adressen der jeweils ersten Instruktion einer Routine sind, die für die spezifische Verarbeitung der jeweiligen Unterbrechungsanforderung in einem Einfach- oder Multiprozessorensystem vorgesehen sind.

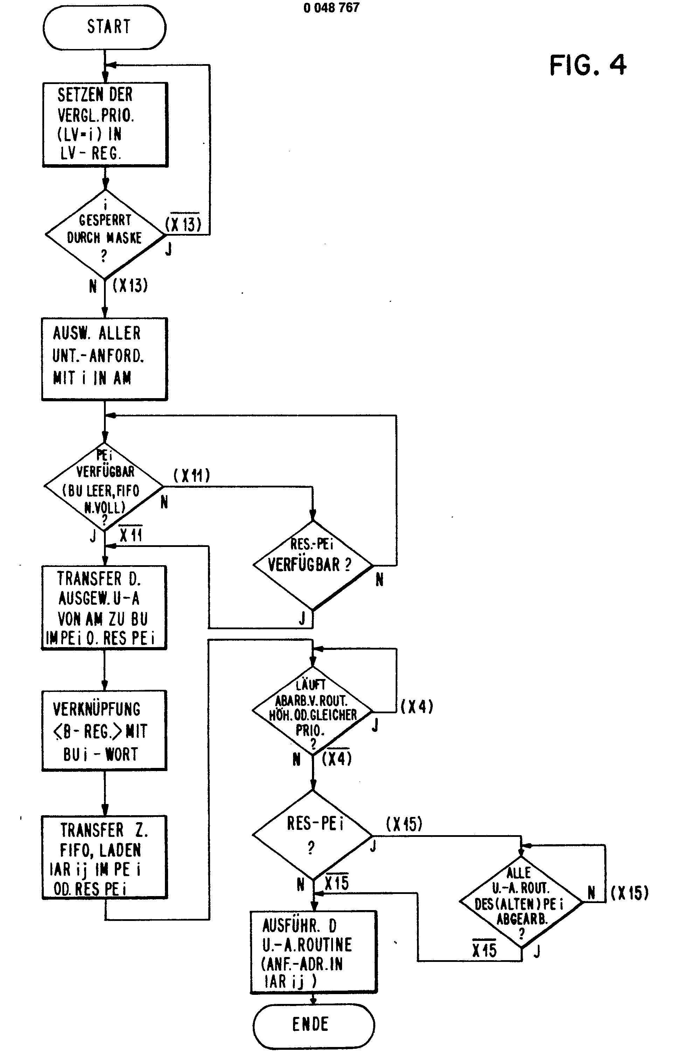

Wie Fig. 4 zeigt, setzt das Betriebssystem der Steuerung ST in Verbindung mit dessen Schaltkreisen die Unterbrechungsstufen (Vergleichwörter) der in der Unterbrechungssteuerung zu verarbeitenden Unterbrechungsanforderungen in die jeweiligen Verarbeitungselemente und prüft auch, ob das Vergleichswort durch Maskierung zugelassen, verändert oder unverändert ist.

In der Steuerung ST sind hierzu, wie Fig. 2 zeigt, ein Unterbrechungsstufenregister (LV-REG) 8, ein Maskenregister (MA-REG) 7 und eine Markierungsschaltung (SV) 6 vorgesehen.

Eine Auswahl der Unterbrechungsanforderungen einer vorgegebenen Unterbrechungsstufe oder Priorität i erfolgt mittels eines Assoziativspeichers (AM) 5, der ebenfalls in der Steuerung ST vorgesehen ist, in den zuvor die Unterbrechungsanforderungen der Unterbrechungsquellen über ein Unterbrechungsregister (INT-REG) 4 eingespeichert wurden. Gleichzeitig wird geprüft, ob Verarbeitungselemente dieser Priorität verfügbar sind, was beispielsweise dadurch geschehen kann, dass geprüft wird, ob in den Verarbeitungselementen PEi vorhandene Pufferspeicher und Stapelspeicher leer bzw. nicht voll sind und ob auch das Unterbrechungsstufenregister (13) mit dieser Unterbrechungsstufe (LV=i) geladen ist.

Ist ein Verarbeitungselement für die Vorverarbeitung einer Unterbrechungsanforderung der betrachteten Priorität i verfügbar, dann werden bestimmte Informationsteile der Unterbrechungsanforderung, nämlich das Unterbrechungsbit IB und die Unterbrechungsstufe SLVL aller im Assoziativspeicher vorhandenen Unterbrechungsanforderungen, denen diese Priorität zugeordnet ist, byteparallel zum Pufferspeicher eines solchen Verarbeitungselementes PEi übertragen. Ist ein solches Verarbeitungselement nicht verfügbar, dann wird auf ein Reserveverarbeitungselement RPE umgeschaltet und der Transfer von Unterbrechungsanforderungen dieser Priorität i in den Pufferspeicher dieses Reserveverarbeitungselementes durchgeführt.

Die in den Pufferspeichern der Verarbeitungselemente zwischengespeicherten Unterbrechungsanforderungen werden, wie bereits erwähnt wurde, hinsichtlich eines bestimmten Teils, nämlich der Unterbrechungsunterstufe SLVL, mit einer Basisadresse in einer in jedem Verarbeitungselement vorhandenen arithmetischen und logischen Einheit ALU verknüpft und über einen zweiten Zwischenspeicher, der nach dem bekannten FIFO-Algorithmus betrieben wird, in ein oder mehrere Instruktionsadressenregister eines jeweiligen Verarbeitungselementes für eine Einfach- oder Mehrfachverarbeitung übertragen. Die Verknüpfung von Basisadresse und Unterbrechungsunterstufe kann auch mittels anderer Strukturen z.B. durch ODER-Verknüpfung oder durch einfaches Zusammensetzen bewirkt werden.

Wenn gerade keine bezüglich der betrachteten Unterbrechungsstufe i höheren Unterbrechungsanforderungen bearbeitet werden, können diejenigen Unterbrechungsroutinen der Unterbrechungsstufe i, deren Anfangsadressen in den Instruktionsadressenregistern IARij stehen, abgearbeitet werden. Dazu müssen vorher jedoch Verarbeitungselemente PEm, falls in ihnen bereits zur Verarbeitung bereitstehende Unterbrechungsanforderungen niedriger Unterbrechungsstufe vorhanden sind, gesperrt werden. Andererseits ist es nicht möglich, Unterbrechungsroutinen mit höherer Unterbrechungsstufe, die sich in Bearbeitung befinden, zu unterbrechen.

Wenn weiterhin ein Reserveverarbeitungselement RPEi der gleichen Unterbrechungsstufe i aktiviert wurde, dann müssen zuerst die sich im originären Verarbeitungselement PEi befindlichen Unterbrechungsanforderungen abgearbeitet werden, bevor die Routinen entsprechend den im Reserveverarbeitungselement befindlichen Unterbrechungsanforderungen gestartet werden können.

Das originäre Verarbeitungselement PEi wird nach Bearbeitung aller seiner Unterbrechungsroutinen zum Reserveverarbeitungselement umgeschaltet, während das zugehörige Reserveverarbeitungselement zum originären Verarbeitungselement wird.

Dieser vorstehend erläuterte Betriebsablauf in der prioritätsstufen gesteuerten Unterbrechungseinrichtung zur Bedienung von Unterbrechungsanforderungen ist in seinen wesentlichen Zügen in Fig. 4 dargestellt. Die Schaltkreisstruktur, die diesen Betriebsablauf ermöglicht, ist ausführlicher in den Fign. 2 und 5 bis 7 dargestellt. Die nun folgende Übersichtstabelle zeigt eine Aufstellung der Steuersignale, welche die Schaltkreise der Einrichtung steuern, die Systemkomponenten auf die sich beziehen und Schaltkreise, welche sie erzeugen. Ferner ist aus dieser Tabelle auch der Status der Systemkomponenten und dessen Codierung in Form der genannten Steuersignale ersichtlich. Unterhalb der Tabelle ist die Bedeutung der Stati in Form einer Legende dargestellt.

Wie Fig. 2 zeigt, kann die prioritätsstufengesteuerte Einrichtung bis zu n + 1 (im vorliegenden Ausführungsbeispiel n = 3) Unterbrechungsquellen INT − SO bis INT − Sn bedienen, die ihre Unterbrechungs- bzw. Bedienungsanforderungen in separate Register 1 bis n eingeben, von wo sie einzeln von der Steuerung ST abgerufen werden. Bei einer anderen Systemkonfiguration ist es prinzipiell möglich, diesen Abruf auch parallel durchzuführen. Die Unterbrechungsanforderungen werden über ein Zwischenregister, das sogenannte Unterbrechungsregister 4 in einen Assoziativspeicher 5, der in der eigentlichen Steuerung untergebracht ist, übertragen. Für die Übertragung der Unterbrechungsanforderung zunächst in das Unterbrechungsregister 4 sind jedem der Register U0, U1, und Un Torschaltungen G10, G11 und G1n vorgeschaltet, die beim Vorliegen der Torsteuersignal τ0 bis τn eine Unterbrechungsanforderung in das Unterbrechungsregister 4 übertragen. Eine Unterbrechungsanforderung, die in einem der Register U0 bis Un bereitgestellt wird, besteht aus einem 2-Bit-Feld, das die Unterbrechungsstufe LV der Unterbrechungsquelle INT − Si angibt, einem 1-Bit-Feld, das ein Unterbrechungsbit IB enthält, einem 4-Bit-Feld, das eine Unterbrechungsunterstufe SLVL angibt, sowie einem 1-Bit-Feld zur Aufnahme eines Sonderbits SB. Sowohl das Unterbrechungsbit IB als auch das Sonderbit SB erfüllen besondere Steueraufgaben, beispielsweise um Steuersignale abzuleiten, die den Status verschiedener Systemkomponenten darstellen. Zum

Tabelle der Steuersignale (Fig. 2)

| System Komponente | Status | Codierung | Referenzbit | Generiert von |
|---|---|---|---|---|
| INT-REG (4) | E/NE | X1/$\overline{X1}$ | 2 (FIG. 3A) | SG (3) |
| AM (5) | F/NF | X2/$\overline{X2}$ | 2 (FIG. 3A) | SG (12) |
| AM-VERGL. (5) | M/MM | X3/$\overline{X3}$ | 0, 1, 2 (FIG. 3A) | Hi (11) |
| PE | B/NB | X4/$\overline{X4}$ | – | CU (9) |
| P-REG (13) | S/RS | X5/$\overline{X5}$ | – | SG (14) |
| COMP (19) | M/MM | X6/$\overline{X6}$ | 0, 1 (FIG. 3A) | COMP (19) |
| BU (15) | E/NE | X7/$\overline{X7}$ | 2 (FIG. 3B) | SG (20) |
| FIFO | E/NE | X8/$\overline{X8}$ | 0 (FIG. 3C) | SG (24) |
| FIFO | F/NF | X9/$\overline{X9}$ | 0 (FIG. 3C) | SG (23) |
| IAR | E/NE | X10/$\overline{X10}$ | – | SG (28, 29, 30) |
| RES-PE | NC/NNC | X11/$\overline{X11}$ | – | CU (9) |
| OPE-REG | S/RS | X12/$\overline{X12}$ | – | SG (31) |
| SV-MASK | NEF/EF | X13/$\overline{X13}$ | – | SV (6) |
| B-REG | S/RS | X14/$\overline{X14}$ | – | SG (17) |
| RPE-REG | S/RS | X15/$\overline{X15}$ | – | SG (32) |
| PE | PR/NPR | X16/$\overline{X16}$ | – | CU (9) |

B/NB – BLOCKIERT/NICHT BLOCKIERT
E/NE – LEER/NICHT LEER
EF/NEF – EFFECTIV/NICHT EFFEKTIV
F/NF – VOLL/NICHT VOLL
M/MM – VERGLEICH POSITIV/NEGATIV
NC/NNC – ERFORDERLICH/NICHT ERFORDERLICH
PR/NPR – ABGEARBEITET/NICHT ABGEARBEITET
S/RS – GESETZT/RÜCKGESTELLT

Beispiel wird das Vorhandensein eines Unterbrechungsbits in der obersten Stufe des Assoziativspeichers (AM) 5 dazu verwendet, um das Steuersignal X2 bzw. $\overline{X2}$ zu erzeugen, das angibt, ob der Assoziativspeicher 5 voll (F) oder nicht voll (NF) ist.

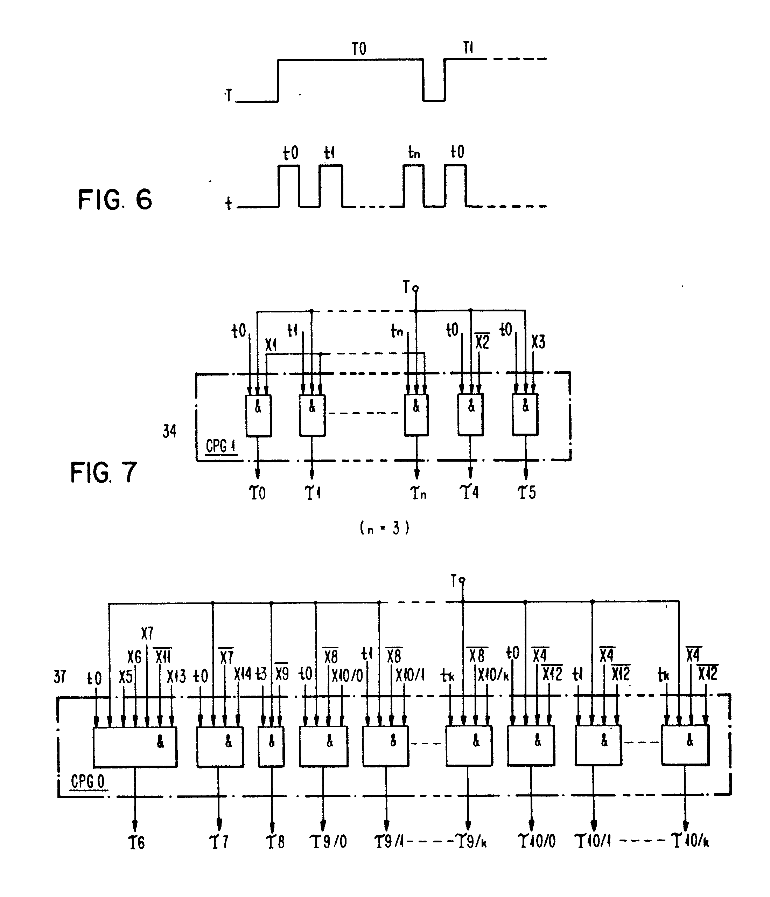

Die Torsteuersignale τ0 bis τn werden, wie auch Fig. 7 ausführlich zeigt, mit Hilfe eines Taktsignales T, eines Taktsignals t, dessen Taktimpulse t0 bis tn nacheinander kommen sowie eines Steuersignals x1 erzeugt. Die zeitliche Relation der Taktsignale T und t zeigt Fig. 6.

Das Steuersignal x1 bzw. $\overline{x1}$ wird von einem Signalgenerator (SG) 3 erzeugt, wenn das Unterbrechungsregister 4 leer (E) bzw. nicht leer (NE) ist. Der Signalgenerator 3 erzeugt dieses Signal in Abhängigkeit von der Anwesenheit bzw. Abwesenheit des Unterbrechungsbits IB in diesem Register.

Unterbrechungsanforderungen gelangen aus dem Unterbrechungsregister 4 in den Assoziativspeicher 5 über eine Torschaltung G2, die von einem Torsteuersignal τ4 gesteuert wird. Dieses Torsteuersignal τ4 wird ebenso wie die Torsteuersignale τ0 bis τ3 von dem Torsteuersignal-Generator (CPG1) 34 erzeugt. Der Zeitpunkt seines Auftretens ist bestimmt durch die Koinzidenz eines Taktsignales T mit einem Taktsignal t0 und dem Steuersignal $\overline{x2}$ (vgl. Fig. 7).

Das letztgenannte Steuersignal gibt über den Status des Assoziativspeichers 5 Auskunft und zwar ob er voll oder nicht voll ist. Erzeugt wird das Steuersignal x2 bzw. $\overline{x2}$ von einem Signalgenerator 12, der ebenfalls die Anwesenheit des Unterbrechungsbits IB feststellt.

Es ist verständlich, dass eine Übertragung von Unterbrechungsanforderungen vom Unterbrechungsregister nur dann in den Assoziativspeicher 5 erfolgen kann, wenn dieser nicht voll ist.

In diesem Assoziativspeicher 5 erfolgt eine Vorverarbeitung der Unterbrechungsanforderungen in Abhängigkeit von einer Steuereinheit (CU) 9, die ihrerseits von einem Steuerprogramm gespeichert wird, das sich in einem Steuerspeicher (PS) 10 befindet.

Diese Steuereinheit 9 besorgt die Initialisierung des Systems insofern, als sie die Unterbrechungsstufen oder Prioritätsränge den einzelnen Verarbeitungselementen PEi zuteilt, indem sie die entsprechenden Unterbrechungsstufenregister (P-REG) 13 in den jeweiligen Verarbeitungselementen lädt, die dort befindlichen einstufigen Steuerregister RPE-REG und OPE-REG auf 0 setzt, ferner das Unterbrechungsstufenregister 8 in der Steuerung ST mit beispielsweise der höchsten Unterbrechungsstufe und auch das Maskenregister (MA-REG) 7 mit einer Anfangsmaske lädt.

Die Unterbrechungseinrichtung verdankt ihre hohe Flexibilität diesem Zusammenwirken des Assoziativspeichers 5 mit der Steuereinrichtung 9 sowie der Maskierungsschaltung (SV) 6, durch die den Verarbeitungselementen PEi im Bedarfsfalle andere Unterbrechungsstufen zugeteilt und ein Eingreifen in die Unterbrechungsstufen selbst mit Hilfe von Masken nach Wunsch und Bedarf vorgenommen werden kann.

Die Steuereinheit 9 liefert ferner weitere Steuersignale, wie beispielsweise die Torsteuersignale τL zum Durchschalten des Tores G5 zwischen dem Unterbrechungsstufenregister 8 und der Maskierungsschaltung sowie dem Assoziativspeicher 5. Bei einer Operation ohne Anwendung einer Maske wird mit den im Assoziativspeicher 5 gespeicherten Unterbrechungsanforderungen eine assoziative Suchoperation hinsichtlich der Unterbrechungsstufe LV durchgeführt. Ein an den Assoziativspeicher 5 angeschlossener Trefferindikator (HI) 11 erzeugt bei vorgefundenen Übereinstimmungen, d.h. bei vorgefundenen Unterbrechungsanforderungen, deren Unterbrechungsstufe mit der im Unterbrechungsstufenregister 8 gespeicherten Unterbrechungsstufe übereinstimmen, ein Steuersignal x3 bzw. das Steuersignal $\overline{x3}$, wenn keine solche Übereinstimmung festgestellt worden ist.

Eine Übertragung der Unterbrechungsanforderungen, die eine Übereinstimmung mit der gespeicherten Unterbrechungsstufe aufweisen, über die Torschaltung G3 erfolgt aber nur dann, wenn ein Steuersignal X3 von der Trefferanzeige 11 gebildet werden konnte, denn nur dann erzeugt der Torsteuerimpulsgenerator 34 das für dieses Tor G3 vorgesehene Torsteuerungssignal τ5. Mit dem Torsteuersignal τ5 jedenfalls werden die selektierten Unterbrechungsanforderungen über die Hauptsammelleitung (MB) 38 vom Assoziativspeicher 5 in dasjenige Verarbeitungselement PEi, dessen Unterbrechungsstufe i im Unterbrechungsstufenregister 13 gespeichert ist, in den Pufferspeicher (BU) 15 des betreffenden Verarbeitungselementes PEi übertragen. Wie ein Vergleich der Fign. 3A und 3B zeigt, werden die Bits 0 und 1 der Unterbrechungsanforderung, die die Unterbrechungsstufe LV der Unterbrechungsanforderung kennzeichnen und die sowohl im Unterbrechungsregister 4 als auch im Assoziativspeicher 5 noch mitgespeichert wurden, nicht mehr mit übertragen, da sie von nun an nicht mehr benötigt werden. In den Pufferspeicher 15 gelangt somit nur noch das Unterbrechungsbit IB, die Unterbrechungsunterstufe SLVL und gegebenenfalls noch das Sonderbit SB, wenn es für bestimmte Steueraufgaben, die noch zeitlich nachfolgen, benötigt werden sollte.

Eine Übertragung in den Pufferspeicher 15 des Verarbeitungselementes PEi kann aber nur dann erfolgen, wenn dieses nicht in einer vorangegangenen Operation blockiert worden ist. Dann nämlich kann das Torsteuersignal τ6 zur Steuerung des Tores G6 von dem Torsteuer-Impulsgenerator (CPG2) 37 nicht erzeugt werden. Fig. 7 zeigt ausführlich die Bedingungen, unter denen dieses Torsteuersignal τ6 erzeugt wird. Diese sind das gleichzeitige Vorliegen eines Taktimpulses T, eines Taktimpulses t0, eines Steuersignals x5, das von dem Signalgenerator 14 erzeugt wird, wenn das Unterbrechungsstufenregister 13 geladen ist, eines Steuersignales x6, das bei einem positiven Vergleichsergebnis des Vergleichers (COMP) 19 erzeugt wird, wenn nämlich der im Unterbrechungsstufenregister 13 gespeicherte Wert mit dem über die Hauptsammelleitung 38 in das Unterbrechungsstufenregister 18 übertragene Wert, der in der betrachteten Unterbrechungsanforderung enthalten ist, übereinstimmt. Ausserdem muss das Steuersignal x7 vorliegen, das von dem Steuersignalgenerator 20 erzeugt wird, wenn der Pufferspeicher 15 leer ist. Ferner ist das Signal $\overline{x11}$ erforderlich, das von der Steuereinheit 9 erzeugt wird, wenn diese anhand der Steuersignale x10 bzw. $\overline{x10}$ feststellt, dass eine Reserveverarbeitungseinheit RES-PE benötigt (NC) wird. Schliesslich ist auch das Vorhandensein des Steuersignals x13 notwendig, das von der Maskierungsschaltung 6 erzeugt wird, wenn eine Maskierung nicht wirksam (NEF) ist.

Unter diesen Vorraussetzungen wird also das Torsteuersignal τ6 erzeugt. Der Pufferspeicher 15 hat genauso viele Zeilen (Wörter), wie der Assoziativspeicher 5, so dass er mit dem nachgeschalteten, i.a. grösseren Stapelspeicher 22 selbst eine Betriebsbedingung bewältigen kann, in der der Assoziativspeicher 5 vollständig mit Bedienungsanforderungen der gleichen Unterbrechungsstufe gefüllt ist. Alle Unterbrechungsanforderungen gelangen dann byteparallel über das Tor G6 in den Pufferspeicher 15 eines selektierten Verarbeitungselementes PEi.

Es sei weiterhin angenommen, dass ein Betriebszustand vorliegt, in dem das betrachtete Verarbeitungselement PEi, das der Unterbrechungsstufe oder Priorität i zugeordnet ist, zur Aufnahme neuer Unterbrechungsanforderungen fähig ist. In einem nächsten Schritt wird nun geprüft, ob das Basisadressenregister (B-REG) 16 mit einer Basisadresse geladen ist. Ein Signalgenerator 17 übernimmt diese Prüfung und erzeugt das Steuersignal x14, wenn dieses Register mit einer Basisadresse geladen ist bzw. erzeugt das Steuersignal $\overline{x14}$, wenn dieses Register leer ist. Wie auch schon erwähnt wurde, erzeugt der Signalgenerator 20 ein Ausgangssignal x7, wenn der Pufferspeicher 15 leer bzw. ein Steuersignal $\overline{x7}$, wenn der Pufferspeicher nicht leer ist. Wenn die Steuersignale $\overline{x7}$ und x14 vorliegen, bedeutet dieses, dass an den Eingangsregistern A und B einer arithmetischen und logischen Einheit (ALU) 21 als beispielsweise additiv zu verknüpfende Werte die Basisadresse aus dem Basisadressenregister 16 und die Unterbrechungsunterstufe einer Unterbrechungsanforderung aus dem Pufferspeicher 15 anliegen. In diesem Fall wird ein Steuersignal τ7 von dem Steuerimpulsgenerator 37 erzeugt, das die arithmetische und logische Einheit 21 dazu veranlasst, die beiden an ihrem Eingang anliegenden Werte miteinander zu verknüpfen und das Ergebnis in ein Ausgangsregister O-REG zu übertragen. Das Kriterium für die Übertragung der so gebildeten realen Adresse in den Stapelspeicher 22 über eine Torschaltung G7 ist dann gegeben, wenn die Bedingungen für die Erzeugung des Torsteuersignals τ8 erfüllt sind. Dieses ist dann der Fall, wenn der Steuerimpulsgenerator 23 das Ausgangssignal $\overline{x9}$ erzeugt hat, das über den Zustand dieses Stapelspeichers die Aussage macht, dass dieser nicht voll (NF) ist. Wie Fig. 7 zeigt, wird also das Steuersignal τ7 erzeugt, wenn ein T-Taktimpuls, ein t0-Taktimpuls, das Steuersignal $\overline{x7}$ und das Steuersignal x14 gleichzeitig vorliegen. Die im Stapelspeicher 22 enthaltene Information, die nun die wahre Adresse der ersten Instruktion einer Unterbrechungsroutine ist, hat das in Fig. 3C dargestellte Format. Wie auch dort zu sehen ist, besteht die wahre Adresse aus einer Basisadresse, nämlich dem Inhalt des Basisadressenregisters 16 und der zugehörigen Unterbrechungsunterstufe SLVL der betrachteten Unterbrechungsanforderung als Versatzadresse.

Bevor nun diese realen Adressen von jeweils ersten Instruktionen von Unterbrechungsroutinen über Torschaltungen G80 bis G8K in Instruktionsadressenregister (IARO bis IARk) 25 bis 27 übertragbar sind, muss zuvor überprüft werden, ob die genannten Instruktionsadressenregister nicht noch mit vorher geladenen Adressen belegt sind. Hierzu dienen Signalgeneratoren 28 bis 30, die Steuersignale x10/0 bis x10/k bzw. $\overline{x10/o}$ bis $\overline{x10/k}$ erzeugen, wenn diese Register leer bzw. nicht leer sind. Die genannten Steuersignale dienen dann letztlich zur Bildung von Torsteuersignalen τ9/o bis τ9/k zur Durchschaltung der Torschaltungen G80 bis G8K auf die Instruktionsadressenregister IARO bis IARK.

Wie Fig. 7 weiter zeigt, sind für die Bildung der genannten Torsteuersignale ein Taktimpuls T sowie Taktimpulse t0 bis tk, die Steuersignale $\overline{x8}$ und x10/o bis x10/k erforderlich. Das noch nicht näher erläuterte Steuersignal x8 bzw. $\overline{x8}$ wird von einem Signalgenerator 24 erzeugt, der anhand der Unterbrechungsbits im Stapelspeicher 22 feststellt, ob dieser Speicher leer bzw. nicht leer ist.

Die Anzahl k von parallelen Instruktionsadressenregistern, die in einem Verarbeitungselement vorgesehen sind, sollte der Anzahl der nachgeschalteten Verarbeitungseinheiten oder Prozessoren entsprechen, die z.B. in einem Multiprozessorsystem vorgesehen sind.

Bevor aber mit der Abarbeitung einer Unterbrechungsroutine begonnen werden kann, müssen ebenfalls zuvor wieder einige Betriebszustände untersucht werden. Wie Fig. 2 zeigt, erfolgt die Freigabe von realen Adressen zur Übertragung aus den Instruktionsregistern in das Steuerwerk der angeschlossenen Prozessoren mit Hilfe von Torsteuersignalen τ10/o bis τ10/k. Aus Fig. 7 ist zu sehen, dass zur Erzeugung der genannten Torsteuersignale neben den Taktsignalen T und t0 bis tn auch die Steuersignale $\overline{x4}$ und $\overline{x12}$ erforderlich sind. Das Steuersignal x4 bzw. $\overline{x4}$ wird von der Steuereinheit 9 erzeugt und gibt über den Zustand des betreffenden Verarbeitungselementes Auskunft, beispielsweise ob es blockiert ist oder nicht, blockiert vielleicht dadurch, dass Unterbrechungsanforderungen höherer Unterbrechungsstufe gerade abgearbeitet werden.

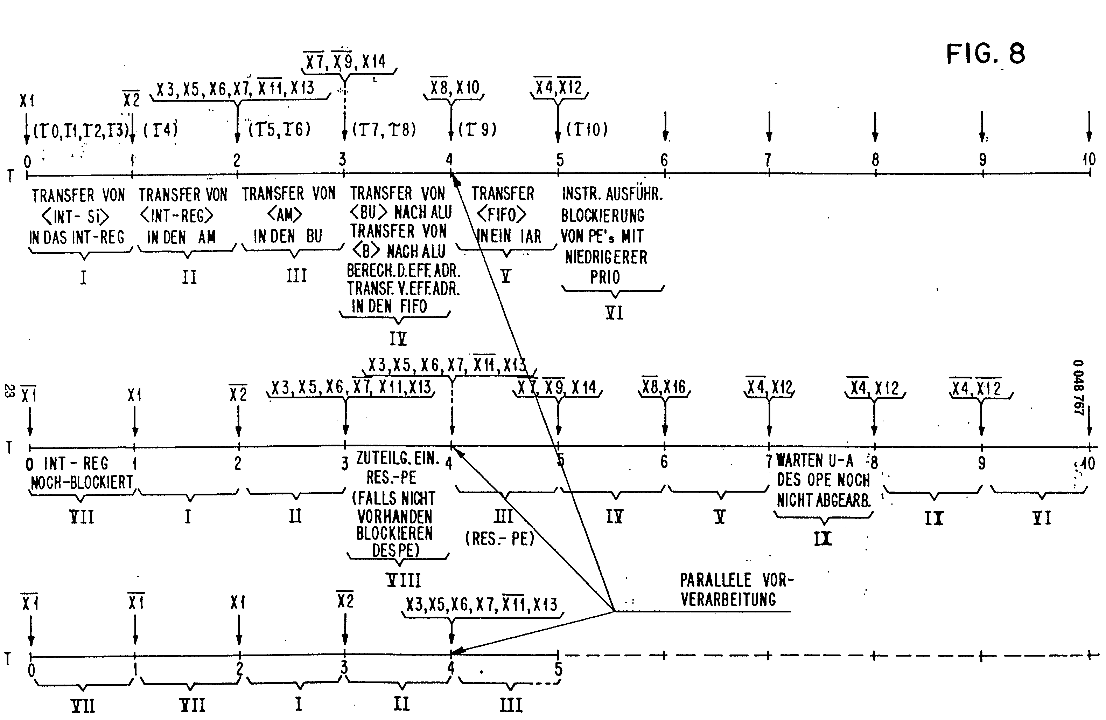

Den vorstehend erläuterten Betriebsablauf kann man als einen normalen Betriebsablauf bezeichnen, in dem Sondersituationen aufgrund besonderer Systemzustände noch nicht aufgetreten waren. Ein vom normalen abweichender Betriebsablaufs ist beispielsweise in Fig. 8 in dem mittleren der drei Diagramme dargestellt. Zunächst sei aber nocheinmal auf den normalen Betriebsablauf im oberen Diagramm in Fig. 8 eingegangen.

Fig. 8 ist im Zusammenhang mit den Fign. 2 und 7 zu sehen. Durch das Steuersignal x1 wird in Verbindung mit den Torsteuersignalen τ0 und bis τ3 der Betriebsschritt I eingeleitet, durch den die Übertragung der Unterbrechungsanforderungen der verschiedenen Unterbrechungsquellen in das Unterbrechungsregister vorgenommen wird. Der Betriebsschritt II, nämlich die Übertragung einer Unterbrechungsanforderung in das Unterbrechungsregister wird durch ein Steuersignal $\overline{x2}$ eingeleitet und durch das Torsteuersignal τ4 vollzogen.

An den Betriebsschritt II schliesst sich der Betriebsschritt III an, der eine Übertragung des ausgewählten Inhaltes des Assoziativspeichers in einen selektierten Pufferspeicher vornimmt. Gesteuert wird dieser Betriebsschritt durch die Steuersignale x3, x5 bis 7, $\overline{x11}$ und x13 (τ5 u. τ6).

Der Betriebsschritt IV beinhaltet die Übertragung des Inhalts des Pufferspeichers sowie des Basisadressenregisters des selektierten Verarbeitungselementes in dessen arithmetische und logische Einheit sowie die Berechnung der effektiven Adresse und Übertragung der errechneten effektiven Adresse in den Stapelspeicher. Gesteuert wird dieser Betriebsschritt von den Steuersignalen $\overline{x7}$, $\overline{x9}$, x14, τ7 und dem Torsteuersignal τ8.

Nachdem nun die effektiven Instruktionsadressen im Stapelspeicher gespeichert sind, wird im Betriebsschritt V bei Vorliegen der erforderlichen Kriterien die Übertragung einer effektiven Adresse in ein Instruktionsadressenregister vorgenommen. Die hierzu erforderlichen Kriterien sind das Vorliegen der Steuersignale $\overline{x8}$ und x10, die zur Bildung des Torsteuersignals τ9 führen.

Der letzte Betriebsschritt VI eines normalen Betriebsablaufs besteht in der Instruktionsausführung durch Übertragen der Anfangsinstruktionsadresse einer Unterbrechungsroutine in den zugehörigen Prozessor und die Blockierung von Verarbeitungselementen mit niedrigerer Unterbrechungsstufe.

Bei dem im mittleren Diagramm in Fig. 8 dargestellten Betriebsablauf ergibt sich ein noch nicht erläuterter Betriebsschritt VII, in dem die Übertragung von Unterbrechungsanforderungen in das Unterbrechungsregister noch blockiert ist, weil, wie das Vorhandensein des Steuersignals $\overline{x1}$ ausweist, dieses noch nicht leer ist.

Danach folgen die beiden Betriebsschritte I und II, die bereits erläutert wurden.

Daran schliesst sich eine neue Betriebssituation an, die als Betriebsschritt VIII bezeichnet ist. Es handelt sich hierbei um die Zuteilung eines Reserveverarbeitungselementes, weil das zugehörige alte Verarbeitungselement voll ausgelastet ist.

Falls aber ein Reserveverarbeitungselement nicht verfügbar ist, muss auch in diesem Betriebsschritt VIII das betrachtete Verarbeitungselement blockiert werden. Diese Betriebssituation ist zunächst gekennzeichnet durch das Steuersignal $\overline{x7}$, das erzeugt wird, wenn der Pufferspeicher dieses Verarbeitungselementes noch nicht gänzlich leer ist. Ausserdem wird das Steuersignal x11 generiert, das einen Betriebsstatus kennzeichnet, in dem ein Reserveverarbeitungselement erforderlich ist.

Daran schliessen sich die bereits oben erläuterten Betriebsschritte III bis V an, die sich aber hier auf das Reserveverarbeitungselement und nicht auf das «alte» Verarbeitungselement beziehen.

Der hierauf normalerweise folgende Betriebsschritt VI, nämlich die Instruktionsausführung und die Blockierung von Verarbeitungselementen mit niedriger Priorität kann sich aber noch nicht unmittelbar an den Betriebsschritt V anschliessen, da, wie Fig. 8 im mittleren Diagramm zeigt, ein Betriebsschritt IX eventuell mehrmals zwischengeschaltet werden muss, in dem für die Dauer einer T-Taktzeit auf die Instruktionsausführung gewartet werden muss, weil die Unterbrechungsanforderungen, die im algen Verarbeitungselement noch vorhanden sind, noch nicht vollständig abgearbeitet sind. Gekennzeichnet ist dieser Betriebsschritt IX durch die Steuersignale $\overline{x4}$ und x12. Für die Wartezeit ist im wesentlichen das Steuersignal X12 verantwortlich, das vom Signalgenerator 31 gebildet wird, wenn das OPE-Register gesetzt ist. Gesetzt wird dieses Register über ein Steuersignal x16 von der Steuereinheit 9, und es wird erst zurückgesetzt (Steuersignal $\overline{x12}$), wenn alle Unterbrechungsanforderungen des alten Verarbeitungselementes abgearbeitet sind. In diesem Falle erzeugt die Steuereinheit 9 das Steuersignal $\overline{x16}$.

Da auch zur nächsten T-Taktzeit das OPE-Register noch gesetzt ist (Steuersignal x12), muss auch hier das Reserveverarbeitungselement noch warten, bis es seine erste Unterbrechungsanforderung vorverarbeiten kann. Dieses ist, wie Fig. 8 zeigt, erst zur T-Taktzeit 9 der Fall, wie das Steuersignal $\overline{x12}$ anzeigt. Während dieser Zeit kann dann der Betriebsschritt VI durchgeführt werden.

Das untere Diagramm in Fig. 8 zeigt, wie in der Anfangsphase durch noch nicht freigewordene Unterbrechungsregister die Betriebsschritte VII so lange wiederholt werden, bis durch die Bildung des Steuersignales x1 angezeigt wird, dass das Unterbrechungsregister zur Aufnahme von neuen Unterbrechungsanforderungen aus den Unterbrechungsquellen bereit ist.

Im übrigen ist durch die Pfeile in Fig. 8 angedeutet, in welcher Weise sich eine parallele Vorverarbeitung in der Gesamtheit aller Verarbeitungselemente ergibt.

Im folgenden sei noch auf einige Besonderheiten der Steuerung ST in Fig. 2 hingewiesen, die von dem Betriebssystem der Steuereinheit 9 behandelt werden. Es sei an dieser Stelle auch erwähnt, dass die Funktion der Steuereinheit 9 in Verbindung mit ihrem Programmspeicher 10 und der Maskierungsschaltung 6 auch vom Betriebssystem eines der angeschlossenen Prozessoren gesteuert werden kann und somit nicht unbedingt als separate Einheit vorhanden sein muss. Es sei auch darauf hingewiesen, dass Steuersignale, die von den individuellen Verarbeitungselementen PE0 bis PE1 an die Steuereinheit 9 gerichtet sind, wie beispielsweise die Steuersignale x10/0 bis $\overline{x10/k}$, x9 und $\overline{x9}$ zur Kennzeichnung, aus welchem Verarbeitungselement sie kommen, noch individuell mit ihrem jeweiligen Index zu versehen wären. Das gleiche gilt auch für Steuersignale, die aus bestimmten Betriebssituationen und den vorgenannten Steuersignalen abgeleitet wurden und sich von der Steuereinheit 9 an individuelle Verarbeitungselemente richten, da diese ebenfalls noch mit den Indizes derjenigen Verarbeitungselementen zu bezeichnen wären, an die sie sich im Einzelfalle richten. Diese Details in der Bezeichnung der Steuersignale wurden jedoch zur Vereinfachung der Beschreibung in den Fign. 1, 2, 7 und 8 weggelassen. Die Fign. 2 und 7 zeigen ohnedies nur die Verhältnisse für das Verarbeitungselement PE0 ausführlich.

Zu Beginn der Initialisierung gibt es in der Unterbrechungssteuerung nur sogenannte neutrale Verarbeitungselemente (neutrale PE), also solche, die noch keiner Unterbrechungsstufe LV zugeteilt worden sind. Erkennbar sind neutrale Verarbeitungselemente daran, dass ihre RPE-Register, OPE-Register und P-Register auf 0 eingestellt sind.

Wie bereits zu Anfang der Beschreibung erläutert wurde, erfolgt in der Initialisierungsphase das Aufsetzen der P-Register mit der Information der Unterbrechungsstufe LV, die einem in Frage kommenden Verarbeitungselement zugeteilt werden soll.

Solche Verarbeitungselemente, deren P-Register nun mit Unterbrechungsstufen geladen und bei denen das RPE-Register und das OPE-Register auf 0 gesetzt sind, werden als normale Verarbeitungselemente (normale PE) bezeichnet.

Wenn infolge eines Überlaufes bzw. infolge einer anderen Blockierung zu einem normalen Verarbeitungselement ein Reserveverarbeitungselement sozusagen zugeschaltet werden muss, dann wird im P-Register eines neutralen Verarbeitungselementes die Unterbrechungsstufe, die auch dem überlaufenden Verarbeitungselement zugeteilt worden war, eingegeben. Sein Hauptkennzeichen als Reserveverarbeitungselement ist nun eine «1» in dem RPE-Register. Das OPE-Register bleibt auf 0 zurückgestellt.

Das überlaufende und mit einem Reserveverarbeitungselement beschaltete normale Verarbeitungselement muss nun aber als altes Verarbeitungselement gekennzeichnet werden, damit sichergestellt werden kann, dass im Reserveverarbeitungselement Unterbrechungsanforderungen dieser Unterbrechungsstufe erst dann abgearbeitet werden können, wenn diejenigen im alten Verarbeitungselement vollständig abgearbeitet worden sind.

Ein Kennzeichen für ein altes Verarbeitungselement (altes PE) ist ein auf 1 gesetztes OPE-Register, ein auf 0 rückgestelltes RPE-Register und ein mit der entsprechenden Unterbrechungsstufe geladenes P-Register.

Das Betriebssystem nimmt diese Steueraufgaben beispielsweise durch das Erstellen von Listen freier Verarbeitungselemente und solcher Verarbeitungselemente wahr, die einen Überlauf erzeugen.

Die im Betriebsschritt VI angeführte Blockierung von Verarbeitungselementen mit niedriger Unterbrechungsstufe, also mit niedrigerer Priorität, kann mit Hilfe bekannter Prioritätssteuerschaltungen vorgenommen werden. Diese Steuerschaltungen erzeugen dann das Blockiersignal x4 bzw. $\overline{x4}$.

Schliesslich zeigt Fig. 5 ein Prinzipschaltbild der Maskierungsschaltung 6, die in Fig. 2 dargestellt ist und mit ihren Steuersignalen $\overline{x13}$ bzw. $\overline{x13/0}$ bis $\overline{x13/1}$ in der Lage ist, die assoziative Suchoperation hinsichtlich einer durch eine Maske gekennzeichneten Unterbrechungsstufe zu unterbinden. Zu den Signalen $\overline{x13/0}$ bis $\overline{x13/1}$ ist zu sagen, dass diese individuell von der Steuerung ST für die einzelnen Verarbeitungselemente PE0 bis PE1 erzeugt werden. Diese Maskierungsschaltung besteht im wesentlichen aus einem Decodierer DEC, der die Unterbrechungsstufen in einen anderen Code transformiert, der im unteren Teil von Fig. 5 dargestellt ist. Ausserdem sind vier UND-Tore vorgesehen, deren Ausgänge über ein ODER-Tor zusammengefasst sind. Das Ausgangssignal dieses ODER-Tores ist das Steuersignal $\overline{x13}$.

Die UND-Tore haben jeweils zwei Eingänge, von denen der eine mit einer Leitung des Decodierers, der andere mit einem Ausgang des Maskenregisters 7 verbunden ist. Bei dem in Fig. 5 dargestellten Ausführungsbeispiel wird somit die Prioritätsstufe 00 durch eine Maske mit der Form 1000 gesperrt, da die UND-Bedingung für das UND-Tor oben links erfüllt ist. Auf diese Weise wird das Steuersignal $\overline{x13}$ erzeugt, das angibt, dass eine Unterbrechungsstufenmaskierung wirksam ist.

Das Steuersignal x13 wird mit Hilfe eines Inverters I erzeugt, der am Ausgang des genannten ODER-Tores angeschlossen ist.

**Patentansprüche**

1. Prioritätsstufengesteuerte Unterbrechungseinrichtung zur Bedienung von Unterbrechungsanforderungen verschiedener Unterbrechungsquellen (U0 bis Un) und Priorität mit einem Unterbrechungsregister (4) zur Übernahme und Übergabe der Unterbrechungsanforderungen von den Unterbrechungsquellen (U0 bis Un), mit mehreren Verarbeitungselementen (Peo bis PEi), die über Einrichtungen (19) zum Vergleich einer ihnen zugeteilten Unterbrechungsstufe (Priorität) mit derjenigen einer einlaufenden Unterbrechungsanforderung und zur Zwischenspeicherung (15) von Unterbrechungsanforderungen bei einem positiven Vergleichsergebnis sowie über ein Basisadressenregister (16) und eine Einrichtung (21) zur Erzeugung einer realen Adresse aus einer Basisadresse und einer Prioritätsunterstufe verfügen, wobei diese reale Adresse die Anfangsadresse einer die eingelaufene Unterbrechungsanforderung bedienenden Routine ist, die in einem Instruktionsadressenregister (z.B. 25) zum Abruf zur Verarbeitung bereitgestellt wird, gekennzeichnet durch

- eine zentrale Steuerung (6 bis 10; Fig. 2) zur Initialisierung der Unterbrechungseinrichtung, zur Übertragung der Unterbrechungsstufen (LV) und von Masken (MA) und zur Erzeugung von verarbeitungseinheitenindividuellen Steuersignalen (z.B. x4/$\overline{x4}$, x11/$\overline{x11}$, x16/$\overline{x16}$) aus in den Verarbeitungselementen erzeugten Steuersignalen (z.B. x5/$\overline{x5}$, x9/$\overline{x9}$, x10/$\overline{x10}$, x12/$\overline{x12}$, x15/$\overline{x15}$),

- einen allen Verarbeitungselementen gemeinsamen Assoziativspeicher (5), dessen Ausgang über eine gemeinsame Sammelleitung (38) mit allen Verarbeitungselementen verbunden ist und in dem die Unterbrechungsanforderungen zwischengespeichert und mittels einer assoziativen Suchoperation hinsichtlich einer von der zentralen Steuerung definierten Unterbrechungsstufe (z.B. LV = i) ausgewählt und dann zu einem dieser zugeordneten Verarbeitungselement (PEi) übertragen werden,

- in jedem Verarbeitungselement vorgesehene Steuerregister (RPE, OPE), die von der zentralen Steuerung eingestellt werden und den Zustand jedes Verarbeitungselementes als neutrales, normales oder Reserve kennzeichnen, so dass, wenn ein normales, einer bestimmten Unterbrechungsstufe (i) zugeordnetes Verarbeitungselement überläuft oder anderweitig blockiert ist, ein neutrales als Reserveverarbeitungselement dieser Unterbrechungsstufe (i) von der zentralen Steuerung bestimmbar ist und

- eine in der zentralen Steuerung (6 bis 10) vorgesehene Blockiereinrichtung (in 9), die eine Verarbeitung von Unterbrechungsanforderungen in Verarbeitungselementen niedrigerer als der gerade bearbeiteten Unterbrechungsstufe so lange blockiert, bis die Unterbrechungsanforderungen mit der höheren Unterbrechungsstufe abgearbeitet sind oder die, falls einer laufenden Unterbrechungsstufe ein Reserveverarbeitungselement zugeteilt wurde, weil das Verarbeitungselement dieser Unterbrechungsstufe vollgelaufen war, die Bearbeitung der Unterbrechungsanforderungen im Reserveverarbeitungselement so lange blockiert, bis alle Unterbrechungsanforderungen des vollgelaufenen Verarbeitungselementes abgearbeitet sind.

2. Einrichtung nach Anspruch 1, gekennzeichnet durch einen in der zentralen Steuerung (6 bis 10; Fig. 2) vorgesehenen Taktgenerator (35), welcher Zeittakte (T, t) erzeugt, welche den zeitlichen Betriebsablauf sowohl in dieser Steuerung als auch in den einzelnen Verarbeitungselementen (PE0 bis PE1) steuern sowie einen ersten Torsteuerimpulsgenerator (34), welcher die Übertragung von Unterbrechungsanforderungen von den Unterbrechungsquellen (U0 bis Un) in ein Unterbrechungsregister (4) sowie von dem Assoziativspeicher (5) zu den Verarbeitungselementen (PE1 bis PEi) steuern, und ferner dadurch, dass

— das in jedem Verarbeitungselement vorgesehene Basisadressenregister (16) zur Aufnahme einer Basisadresse von der zentralen Steuerung geladen wird, dass der Pufferspeicher (15) zur Zwischenspeicherung der vom Assoziativspeicher (5) übertragenen Unterbrechungsanforderungen der Unterbrechungsstufe dient, die dem zugehörigen Verarbeitungselement zugeteilt ist, dass die Einrichtung zur Erzeugung einer realen Adresse aus einer arithmetischen und logischen Einheit (21) besteht, welche die Basisadresse und die in der Unterbrechungsanforderung im Pufferspeicher enthaltene Prioritätsunterstufe gemäss einer vorgegebenen Funktion (z.B. Addition) zu einer realen Adresse verknüpft, dass ferner ein Stapelspeicher (22) als zweiter Zwischenspeicher zur Zwischenspeicherung der von der arithmetischen und logischen Einheit (21) errechneten realen Adressen, mindestens ein Instruktionsadressenregister (z.B. 25) zur Aufnahme jeweils einer realen Adresse, die an einen angeschlossenen Prozessor zur Weiterverarbeitung übertragbar ist sowie ein zweiter Torsteuerimpulsgenerator (37) vorgesehen ist, welcher anhand von den Taktsignalen (T, t) und Steuersignalen (x4 bis x14), die teils von der zentralen Steuerung, teils von der Steuerung des Verarbeitungselementes selbst erzeugt werden, Torsteuersignale generiert, welche die Übertragung von Unterbrechungsanforderungen von der Sammelleitung (38) in den Pufferspeicher (15), die Verknüpfung der Basisadresse mit der Unterbrechungsunterstufe in der arithmetischen und logischen Einheit zu einer realen Adresse, die Übertragung der realen Adresse von der arithmetischen und logischen Einheit in den Stapelspeicher, die Übertragung der realen Adressen aus dem Stapelspeicher in individuelle Instruktionsadressenregister und schliesslich die Übertragung der realen Adressen aus den Instruktionsadressenregistern in die angeschlossenen Prozessoren steuert.

3. Einrichtung nach Anspruch 1 und/oder 2, dadurch gekennzeichnet, dass Signalgeneratoren (3, 11, 12, 14, 17, 20, 23, 24, 28 bis 30, 31 und 32) vorgesehen sind, deren Steuersignale den Torsteuerimpulsgeneratoren (34, 37) zugeführt werden, die diese Steuersignale zusammen mit den Signalen der Takte (T, t) zu Torsteuersignalen (τ0 bis τ10/k) verarbeiten.

4. Einrichtung nach Anspruch 1, dadurch gekennzeichnet, dass in der zentralen Steuerung (6 bis 10) aus den Betriebszuständen der Verarbeitungselemente Tabellen aufgebaut werden, die Verzeichnisse der momentan vorhandenen neutralen, normalen, Reserve- und alten Verarbeitungselemente enthalten, aus denen Steuersignale abgeleitet werden, welche die Steuerregister (RPE und OPE) einstellen, die Zuteilung von Reserveverarbeitungselementen sowie die Blockierung von Reserveelementen vornehmen.

5. Einrichtung nach einem oder mehreren der Ansprüche 1 bis 4, dadurch gekennzeichnet, dass die zentrale Steuereinheit (6 bis 10) eine Maskierungsschaltung (6) enthält, die an den Assoziativspeicher (5) angeschaltet ist, wobei die Markierungsschaltung (6) in Abhängigkeit von einer der Masken (MA) einzelne Bits der Unterbrechungsstufe und der Unterbrechungsunterstufe einer Bedienungsanforderung derart modifizieren kann, dass deren Verarbeitung gesperrt oder deren Priorität erhöht oder erniedrigt oder deren reale Adresse verändert wird.

6. Einrichtung nach einem oder mehreren der Ansprüche 1 bis 5, dadurch gekennzeichnet, dass die Verarbeitungselemente (PE0 bis PE1) auf Steckkarten aufgebaut sind, so dass bei Bedarf durch Hinzustecken weiterer Verarbeitungselemente weitere Unterbrechungsstufen für Unterbrechungsanforderungen zur Verfügung stehen.

**Claims**

1. Priority level-controlled interrupt handler for servicing interrupt requests from different interrupt sources (U0 to Un) and of different priorities with an interrupt register (4) for receiving and transmitting the interrupt requests from the interrupt sources (U0 to Un), with several processing elements (Peo to PEi) having devices (19) for comparing an allocated interrupt level (priority) with that of an incoming interrupt request, and for buffering (15) interrupt requests in case of a positive comparison result, and having a base address register (16) and a device (21) for generating a real address from a base address and a priority sublevel, this real address being the starting address of a routine which services the incoming interrupt request and which in an instruction address register (e.g. 25) is made ready to be fetched for processing, characterized by
— a central control (6 to 10; Fig. 2) for initializing the interrupt device for transferring the interrupt levels (LV) and masks (MA), and for producing processing-unit individual control signals (e.g. x4/$\overline{x4}$, x11/$\overline{x11}$, x16/$\overline{x16}$) of control signals (e.g. x5/$\overline{x5}$, x9/$\overline{x9}$, x10/$\overline{x10}$, x12/$\overline{x12}$, x15/$\overline{x15}$) generated in the processing elements,
— an associative storage (5) common to all processing elements having its output connected via a main bus (38) to all processing elements, and where the interrupt requests are buffered, and selected by means of an associative search operation with respect to an interrupt level (e.g. LV = i) defined by the central control, and subsequently transferred to a processing element (PEi) associated thereto
— control registers (RPE, ORE), provided in each processing element which are set by the central control and which characterize the status of each processing element as neutral, standard, or reserve so that when a standard processing element associated to a specific interrupt level (i) overflows, or is otherwise blocked a mutual one can be selected by the central control as a reserve processing element of this interrupt level (i), and
— a blocking device (in 9 and G11 to G13) in the central control (6 to 10) and the processing elements, which device blocks a processing of interrupt requests in processing elements lower than the interrupt level just being processed until the interrupt requests with the higher interrupt level have been processed or, if a reserve processing element has been allocated to a current interrupt level because the processing element of this interrupt level had been full, which blocks the processing of the interrupt requests in the reserve processing element until all interrupt requests of the full processing element have been processed.

2. Device as claimed in claim 1, characterized by a clock generator (35) provided in the central control (6 to 10; Fig. 2) which generates time clocks (T, t) controlling the operation with respect to time in this control as well as in the individual processing elements (PE0 to PE1), and by a first gate enable pulse generator (34) which controls the transfer of interrupt requests from the interrupt sources (U0 to Un) into an interrupt register (4), as well as from the associative storage (5) to the processing elements (PE1 to PEi), and furthermore in that the base address register (16) provided in each processing element in order to receive a base address is loaded by the central control, that the buffer (15) serves for buffering the interrupt requests of the interrupt level transferred from the associative storage (5) which interrupt level is associated to the respective processing element, that the device for producing a real address consists of an arithmetic and logic unit (21) which combines the base address and the priority sublevel in the interrupt request in the buffer in accordance with a predetermined function (e.g. addition) into a real address, that furthermore a stack of storage locations (22) is provided as a second buffer for buffering the real addresses computed by the arithmetic and logic unit (21), and at least one instruction address register (e.g. 25) to receive one respective real address transferable at a connected processor for further processing, as well as a second gate control pulse generator (37) which by means of the clock signals (T, t) and control signals (x4 to x14) produced partly by the central control and partly by the control of the processing element itself, generates gate control signals controlling the transfer of interrupt requests from the main bus (38) into the buffer (15), the combination of the base address with the interrupt sublevel in the arithmetic and logic unit into a real address, the transfer of the real address from the arithmetic and logic unit into the stack of storage locations, the transfer of the real addresses from the stack of storage locations into individual instruction address registers, and finally the transfer of the real addresses from the instruction address registers into the connected processors.

3. Device as claimed in claim 1 and/or 2, characterized in that signal generators (3, 11, 12, 14, 17, 20, 23, 24, 28 to 30, 31 and 32) are provided whose control signals are applied to the gate enable pulse generators (34, 37) which process these control signals together with the signals of the clocks (T, t) into gate control signals ($\tau 0$ to $\tau 10/k$).

4. Device as claimed in claim 1, characterized in that in the central control (6 to 10) tables are prepared of the operating states of the processing elements, said tables containing lists of the actually existing neutral, standard, reserve, and old processing elements from which control signals are derived which set the control registers (RPE and OPE), effect the allocation of reserve processing elements and the blocking of reserve elements.

5. Device as claimed in one or several of claims 1 to 4, characterized in that the central control unit (6 to 10) comprises a masking circuit (6) connected to the associative storage (5), the masking circuit (6) being able to modify, depending on one of the masks (MA), individual bits of the interrupt level and of the interrupt sublevel of a servicing request in such a manner that its processing is blocked, or its priority is increased or decreased, or its real address is modified.

6. Device as claimed in one or several of claims 1 to 5, characterized in that the processing elements (PE0 to PE1) are provided on plug-in cards so that by plugging in further processing elements further interrupt levels are available for interrupt requests, if necessary.

## Revendications

1. Dispositif d'interruption commandé par niveaux de priorité destiné à traiter les demandes d'interruption de différentes sources d'interruption (U0 à Un) et priorité avec un registre d'interruption (4) pour la reprise et la remise des demandes d'interruption à partir des sources d'interruption (U0 à Un) avec plusieurs éléments de traitement (PEo à PEi) disposant d'installations (19) servant à comparer un niveau d'interruption qui leur est associé (priorité) avec celui d'une demande d'interruption à l'entrée et au stockage intermédiaire (15) des demandes d'interruption en cas d'un résultat positif de la comparaison effectuée ainsi que d'un registre d'adresses de base (16) et d'un dispositif (21) servant à générer une adresse réelle composée d'une adresse de base et d'un niveau de priorité, l'adresse réelle étant l'adresse du début d'une routine traitant la demande d'interruption entrée, mise à disposition dans un registre d'adresses d'instruction (p.ex. 25) pour l'appel en vue du traitement, caractérisé par

— une commande centrale (6 à 10, fig. 2) pour initialiser le dispositif d'interruption, pour le transfert des niveaux d'interruption (LV) et des masques (MA) et pour la génération de signaux de commande individuels des unités de traitement (p.ex. $x4/\overline{x4}$, $x11/\overline{x11}$, $x16/\overline{x16}$) à partir des signaux de commande générés dans les éléments de traitement (p.ex. $x5/\overline{x5}$, $x9/\overline{x9}$, $x10/\overline{x10}$, $x12/\overline{x12}$, $x15/\overline{x15}$),

— une mémoire associative commune à tous les éléments de traitement (5) dont la sortie est reliée par un bus commun (38) à tous les éléments de traitement et dans laquelle les demandes d'interruption sont provisoirement stockées, avant d'être sélectionnées à l'aide d'une opération de recherche associative en vue d'un niveau d'interruption défini par la commande centrale (p.ex. LV = i) et transmises à un élément de traitement (PEi) qui lui est associé,

– des registres de commande prévus dans chaque élément de traitement (RPE, OPE) qui sont mis en place par la commande centralisée et qui caractérisent l'état de chaque élément de traitement, normal, neutre ou de réserve, de sorte que, lorsqu'un élément normal de traitement associé à un certain niveau d'interruption (i) déborde ou est bloqué par ailleurs, un élément neutre puisse être défini par la commande centrale comme élément de traitement de réserve de ce niveau d'interruption (i) et

– un dispositif de blocage prévu dans la commande centrale (6 à 10) et les éléments de traitement (en 9 et G11 à G13) qui bloque le traitement des demandes d'interruption dans les éléments de traitement de niveau inférieur au niveau d'interruption en cours de traitement jusqu'à la fin du traitement de toutes les demandes de niveau d'interruption supérieur ou, si un autre élément de traitement de réserve à été associé à un niveau d'interruption en cours parce que l'élément de traitement était plein, bloque le traitement des demandes d'interruption dans l'élément de traitement de réserve jusqu'à la fin du traitement de toutes les demandes d'interruption de l'élément de traitement rempli.

2. Dispositif suivant la revendication 1,

– caractérisé par un générateur d'impulsions (35) prévu dans la commande centrale (6 à 10, fig. 2) qui génère des impulsions d'horloge (T, t) qui commande le déroulement des opérations dans le temps, aussi bien pour cette commande que pour les différents éléments de traitement (PE0 à PE1) ainsi qu'un premier générateur d'impulsions de commande de porte (34) qui commande le transfert des demandes d'interruption des sources d'interruption (U0 à Un) dans un registre d'interruptions (4) ainsi que de la mémoire associative (5) aux éléments de traitement (PE1 à PEi), et

– caractérisé par le fait que le registre d'adresses de base (16) prévu dans chaque élément de traitement est chargé par la commande centrale pour recevoir une adresse de base, et par le fait que la mémoire tampon (15) sert au stockage provisoire des demandes d'interruption transmises par la mémoire associative (5) associée à l'élément de traitement correspondant, et que le dispositif servant à former une adresse réelle est composée d'une unité arithmétique et logique (21) qui relie l'adresse de base et le niveau inférieur de priorité contenu dans la demande d'interruption présente dans la mémoire tampon suivant une fonction prédéterminée (p.ex. addition), et qu'une mémoire pile (22) servant de seconde mémoire intermédiaire et stockant provisoirement les adresses réelles calculées par l'unité arithmétique et logique (21) est également prévue, ainsi qu'au moins un registre d'adresses d'instructions (p.ex. 25) servant à recevoir une adresse réelle transmissible à un processeur connecté pour traitement ultérieur ainsi qu'un second générateur d'impulsions de commande de porte (37) qui, à l'aide des signaux d'horloge (T, t) et des signaux de commande (x4 à x14) générés en partie par la commande centrale, en partie par la commande de l'élément de traitement lui-même, génère les signaux de commande de porte qui commandent le transfert des demandes d'interruptions du bus (38) dans la mémoire tampon (15), l'enchaînement de l'adresse de base avec le niveau d'interruption dans l'unité arithmétique et logique pour former une adresse réelle, le transfert de l'adresse réelle de l'unité arithmétique et logique dans la mémoire pile, le transfert des adresses réelles de la mémoire pile dans les registres des adresses d'instruction et finalement le transfert des adresses réelles des registres d'adresses d'instruction dans les processeurs raccordés.

3. Dispositif suivant les revendications 1 et/ou 2, caractérisé par le fait que les générateurs de signaux (3, 11, 12, 14, 17, 20, 23, 24, 28 à 30, 31 et 32) sont prévus dont les signaux de commande sont acheminés vers les générateurs d'impulsions de commande des portes (34, 37) qui traitent ces signaux d'impulsion en même temps que les signaux des impulsions d'horloge (T, t) pour en faire des signaux de commande des portes ($\tau 0$ à $\tau 10/k$).

4. Dispositif suivant la revendication 1, caractérisé par le fait que dans la commande centrale (6 à 10), des tableaux sont constitués à partir des états de fonctionnement des éléments de traitement, contenant les listes des éléments de traitement momentanément existants, neutres, normaux, de réserve, et anciens, qui règlent les registres de commande (RPE et OPE) et qui effectuent l'attribution des éléments de traitement de réserve ainsi que le blocage des éléments de réserve.

5. Dispositif suivant une ou plusieurs des revendications 1 à 4, caractérisé par le fait que l'unité centrale de commande (6 à 10) contient un circuit de masquage (6) accouplé sur la mémoire associative (5) de sorte que le circuit de masquage (6) peut modifier certains bits de l'étage d'interruption, en fonction d'une des masques (MA), de telle sorte que leur traitement est bloqué ou que leur priorité est augmentée ou abaissée ou que leur adresse réelle est modifiée.

6. Dispositif suivant une ou plusieurs des revendications 1 à 5, caractérisé par le fait que les éléments de traitement (PE0 à PE1) sont montés sur des cartes enfichables de manière à permettre, par la mise en place d'éléments supplémentaires de traitement, l'obtention de niveaux supplémentaires d'interruption pour les demandes d'interruption.

# FIG. 1

X16 / $\overline{X16}$
X15 / $\overline{X15}$
X12 / $\overline{X12}$
X11 / $\overline{X11}$
$\overline{X10}$
X10
X9 / $\overline{X9}$
X4 / $\overline{X4}$

CL
DB

$T_i$

$t_n$
$t1$
$t0$
T

INT-REG. 4

0    1    3

PE0    PE1    PE2    PEι

T t0    tn  T t0    tn T t0    tn    T t0    tn

# FIG. 3A

INT-Si / INT-REG/AM

| LV | IB | SLVL | SB |
|----|----|------|-----|

BIT: 0 1 2 3 4 5 6 7

# FIG. 3B

BU

| ///// | IB | SLVL | SB |
|-------|----|------|-----|

BIT: 0 1 2 3 4 5 6 7

# FIG. 3C

FIFO

| IB | SLVL + <B-REG> | |
|----|----------------|--|

BIT: 0 1 2 3 4 5 6 7 --- 15

# FIG. 3D

IAR

| ///// | SLVL + <B-REG> | |
|-------|----------------|--|

BIT: 0 1 2 3 4 5 6 7 --- 15

# FIG. 5

LV00    MA

LV-REG    DEC    &    &    &    &    MA-REG

8    7

SV    ≥1    1    6

X13    $\overline{X13}$

DC

| LV | TRANSFORM. | | | |
|----|---|---|---|---|
| 00 | 0 | 0 | 0 | 1 |
| 01 | 0 | 0 | 1 | 0 |
| 10 | 0 | 1 | 0 | 0 |
| 11 | 1 | 0 | 0 | 0 |

FIG. 2

FIG. 2 A

0 048 767

# FIG. 4

**FIG. 6**

**FIG. 7**

$(n = 3)$

FIG. 8

$\overline{X7}, \overline{X9}, X14$

$X3, X5, X6, X7, \overline{X11}, X13$

$\overline{X8}, X10$   $\overline{X4}, \overline{X12}$

X1   $\overline{X2}$

$(T0, T1, T2, T3)$  $(T4)$  $(T5, T6)$  $(T7, T8)$  $(T9)$  $(T10)$

T  0   1   2   3   4   5   6   7   8   9   10

TRANSFER VON $\langle$INT-Si$\rangle$ IN DAS INT-REG

TRANSFER VON $\langle$INT-REG$\rangle$ IN DEN AM

TRANSFER VON $\langle$AM$\rangle$ IN DEN BU

TRANSFER VON $\langle$BU$\rangle$ NACH ALU
TRANSFER VON $\langle$B$\rangle$ NACH ALU
BERECH.D.EFF.ADR.
TRANSF. V.EFF.ADR. IN DEN FIFO

TRANSFER $\langle$FIFO$\rangle$ IN EIN IAR

INSTR. AUSFÜHR. BLOCKIERUNG VON PE's MIT NIEDRIGERER PRIO

I   II   III   IV   V   VI

$\overline{X1}$  X1  $\overline{X2}$

$X3, X5, X6, \overline{X7}, X11, X13$

$X3, X5, X6, X7, \overline{X11}, X13$

$\overline{X7}, X9, X14$   $\overline{X8}, X16$   $\overline{X4}, X12$   $\overline{X4}, X12$   $\overline{X4}, \overline{X12}$

T  0   1   2   3   4   5   6   7   8   9   10

INT-REG NOCH-BLOCKIERT

ZUTEILG.EIN. RES.-PE (FALLS NICHT VORHANDEN BLOCKIEREN DES PE)

WARTEN U-A DES OPE NOCH NICHT ABGEARB.

VII   I   II   VIII   III (RES.-PE)   IV   V   IX   IX   VI

PARALLELE VOR-VERARBEITUNG

$\overline{X1}$  $\overline{X1}$  X1  $\overline{X2}$

$X3, X5, X6, X7, \overline{X11}, X13$

T  0   1   2   3   4   5

VII   VII   I   II   III

0 048 767